# EUROPÄISCHE PATENTSCHRIFT

(11) **EP 2 727 692 B1**
(45) Veröffentlichungstag und Bekanntmachung des Hinweises auf die Patenterteilung: **14.06.2017**
(21) Anmeldenummer: 13191517.5
(22) Anmeldetag: 05.11.2013
(51) Int. Cl.: B28B 23/00, H01H 9/18

(54) **Verfahren zur Herstellung eines Sinter-Komposit-Bauteils und Sinter-Komposit-Bauteil**
Method for producing a sinter composite component and sinter composite component
Procédé de fabrication d'un élément composite fritté et élément composite fritté

(30) Priorität: 06.11.2012 DE 102012110608
(43) Veröffentlichungstag der Anmeldung: 07.05.2014
(73) Patentinhaber: Sembach GmbH & Co. KG, 91207 Lauf a.d. Pegnitz (DE)
(72) Erfinder: Sembach, Martin, 91207 Lauf a.d. Pegnitz (DE); Montel, Christian, 92348 Berg (DE)
(74) Vertreter: Negendanck, Matthias

(56) Entgegenhaltungen:
- EP-A1- 2 589 480
- DE-A1-102006 056 272
- DE-C1- 10 018 933
- US-A1- 2006 199 623

## Beschreibung

### Technisches Gebiet:

Die Erfindung betrifft ein Verfahren zur Herstellung eines Sinter-Komposit-Bauteils und ein Sinter-Komposit-Bauteil.

### Hintergrund:

Aus dem Stand der Technik sind Betätigungselemente aus einem gesinterten Werkstoff bekannt, wobei in den gesinterten Werkstoff Bereiche aus einem anderen Werkstoff eingebracht sind.

Beispielsweise zeigt die Druckschrift US 2006 01 99 623 A1, die wohl den nächstliegenden Stand der Technik bildet, eine Betätigungstaste für ein Mobiltelefon aus einem sinterkeramischen Material. In die Betätigungstaste sind Zahlensymbole aus einem anderen Material eingebracht, wobei die Zahlensymbole das sinterkeramische Material auf einer Sichtseite der Betätigungstaste in zwei Bereiche unterteilt. Die Zahlensymbole sind im Querschnitt der Betätigungstaste so in das sinterkeramische Material eingebracht, dass die beiden Bereiche auf einer von der Sichtseite abgewandten Seite durch eine sinterkeramische Brücke miteinander verbunden sind.

Die Offenbarung der Druckschrift US 2006 01 99 623 A1 belegt, dass bisher zur Einbringung solcher Zahlensymbole durchgehende gesinterte Verbindungen verwendet werden, durch die die beiden gesinterten Bereiche zusammengehalten werden.

Mit dem Verfahren nach der US 2006 01 99 623 A1 ist somit nicht möglich, gesinterte "verlorene" Symbole in gesinterte Bauteile einzubringen, wenn das gesinterte verlorene Symbol als erster Bereich vollständig isoliert zum zweiten gesinterten Bereich des Bauteils angeordnet sein soll.

In dem Dokument EP 2 589 480 A1 ist ein Verfahren zur Herstellung einer Tastenkappe einer Tastatur eines tragbaren elektronischen Geräts, insbesondere eines Mobiltelefons, offenbart. Die Tastenkappe weist einen Körper aus Metall oder Kunststoff auf. Auf einer Rückseite des Körpers wird Material entfernt, um einen Hohlraum in Form eines Zeichens zu bilden. Der Hohlraum wird mit einem Füllmaterial aus einem lichtdurchlässigen Kunststoff gefüllt. Auf der Vorderseite des Körpers wird Material entfernt, um das Füllmaterial auf der Vorderseite freizulegen.

Das Dokument DE 100 18 933 C1 beschreibt ein Tastenelement mit Inselsymbolik für ein elektrisches Gerät, insbesondere für ein Autoradio, und ein Verfahren zu dessen Herstellung. Das Tastenelement weist einen metallischen Tastengrundkörper und einen zumindest teiltransparenten Füllkörper aus Kunststoff auf. In den Tastengrundkörper ist ein Inselsymbol derart eingeprägt, dass eine metallische Symbolinsel ausgebildet ist, die vom Tastengrundkörper durch einen Symbolsteg beabstandet ist, der vollständig von dem teiltransparenten Füllkörper ausgefüllt ist. Bei der Einprägung eines Symbolstempels in dem metallischen Grundkörper wird eine den Grundkörper zusammenhaltende Wandung übriggelassen, die erst nach dem Ausspritzen der Taste mit Kunststoff abgetragen wird.

In dem Dokument US 2006/199623 A1 ist eine Taste für ein Mobiltelefon aus einem ersten Material, insbesondere aus einem keramischen Material oder aus Metall, offenbart. Die Taste weist einen Schlitz in der Form eines Zeichens auf, wobei der Schlitz die Taste ganz oder teilweise durchdringt. Der Schlitz ist mit einem zweiten lichtdurchlässigen oder fluoreszierenden Material wie Gummi oder Kautschuk gefüllt.

Das Dokument DE 10 2006 056 272 A1, das wohl den nächstliegenden Stand der Technik bildet, beschreibt einen beleuchtbaren Körper, der insbesondere im Automobilbereich als Bedienelement, Dreh-und/oder Druckknopf ausgebildet ist, und ein Verfahren zur Herstellung des beleuchtbaren Körpers. Der Körper ist aus einem Grundmaterial, z.B. aus Keramik, Metall, Kunststoff, Stein oder Holz gebildet. Er weist eine Vorderseite und eine Rückseite auf. In die Vorderseite wird mindestens eine Vertiefung eingebracht und mit einer zumindest teilweise transparenten Füllmasse ausgefüllt. Diese wird von der Rückseite des Körpers her freigelegt. Die transparente Füllmasse enthält Kunststoff oder Glas.

Der Erfindung liegt die Aufgabe zugrunde, ein neuartiges und funktionelles Sinter-Komposit-Bauteil bereitzustellen. Diese Aufgabe wird durch ein Verfahren zur Herstellung des Sinter-Komposit-Bauteils mit den Merkmalen des Anspruchs 1 und durch ein Komposit-Bauteil mit den Merkmalen des Anspruchs 6 gelöst. Bevorzugte oder vorteilhafte Ausführungsformen der Erfindung ergeben sich aus den Unteransprüchen, der nachfolgenden Beschreibung und/oder den beigefügten Figuren.

Es wird ein Verfahren zur Herstellung eines Sinter-Komposit-Bauteils vorgeschlagen. Das Verfahren umfasst folgende Schritte:
Es wird ein Grundgerüst gefertigt, das aus einem gesinterten Werkstoff besteht. Insbesondere wird das Grundgerüst durch Sintern hergestellt. Das Grundgerüst weist einen ersten und einen zweiten Sinterabschnitt auf und umfasst mindestens eine gesinterte Halteeinrichtung.

In einer möglichen Ausgestaltung der Erfindung wird das Grundgerüst, bevorzugt vor dem Sintern, eingefärbt. Beispielsweise erfolgt das Einfärben des Grundgerüsts durch Zugabe und/oder Beifügen von Metalloxiden zu dem zu sinternden Material. Möglich im Rahmen der Erfindung ist auch, dass das Grundgerüst nach dem Sintern beschichtet und dadurch eingefärbt wird.

Durch das Einfärben kann das Grundgerüst optional eine andere Farbe als weiß aufweisen. Beispielsweise kann das Grundgerüst die Farbe schwarz, rot, gelb, blau, grün, orange, braun oder violett aufweisen. Insbesondere kann das Grundgerüst in einer der zahlreichen Farben der RAL-Palette ausgebildet sein.

Zwischen dem ersten und zweiten Sinterabschnitt ist ein Freiraum angeordnet, der durch die Halteeinrichtung überbrückt ist. Vorzugsweise sind der erste und zweite Sinterabschnitt durch den Freiraum vollständig voneinander beabstandet angeordnet, wobei ein Auseinanderfallen der Sinterabschnitte ausschließlich durch die Halteeinrichtung verhindert wird. Insbesondere ist die Halteeinrichtung auf einer Vorderseite, Oberseite und/oder Sichtseite des Grundgerüsts angeordnet.

Ein weiterer Schritt im Rahmen des Verfahrens sieht vor, dass in den Freiraum ein anderer Werkstoff, bevorzugt von einer Rückseite und/oder Unterseite des Grundgerüsts, eingebracht wird. Optional kann der andere Werkstoff flüssig oder aus einem Feststoff gebildet sein. Wenn der Werkstoff flüssig ist, wird der Freiraum mit diesem befüllt. Vorzugsweise härtet der flüssige Werkstoff nach dem Befüllen des Freiraums darin vollständig aus. Wenn der Werkstoff als Feststoff bzw. Festkörper ausgebildet ist, wird dieser bevorzugt in den Freiraum eingesetzt und/oder eingelegt und/oder eingepresst.

Die Halteeinrichtung bildet bevorzugt einen Einfüllboden für den in den Freiraum eingebrachten anderen Werkstoff. Insbesondere verhindert die Halteeinrichtung als Einfüllboden ein Herausfallen und/oder Herausfließen des anderen Werkstoffs aus dem Freiraum. Bevorzugt weist die Halteeinrichtung für die Ausbildung und/oder Funktion als Einfüllboden eine ausreichende Dicke bzw. Stärke auf.

In einer bevorzugten Ausbildungsform der Erfindung beträgt die Dicke der Halteeinrichtung mindestens 0,1 Millimeter, insbesondere mindestens 0,07 Millimeter und/oder maximal 1 Millimeter. In dieser Stärke ist die Halteeinrichtung besonders wirtschaftlich abtragbar und/oder entfernbar. In einer besonders bevorzugten Ausbildungsform beträgt die Dicke der Halteeinrichtung 0,6 Millimeter. Eine größere Stärke der Halteeinrichtung als 1 Millimeter ist zwar im Rahmen der Erfindung grundsätzlich möglich, würde jedoch wirtschaftliche Nachteile mit sich bringen.

Ein weiterer Schritt im Rahmen des Verfahrens umfasst das Entfernen der Halteeinrichtung, sodass das Sinter-Komposit-Bauteil gebildet ist. Das Sinter-Komposit-Bauteil weist eine Gesamtfunktionsseite auf, die vorzugsweise durch das Entfernen der Halteeinrichtung gebildet wird. Vorzugsweise wird die Halteeinrichtung in ihrer Dicke vollständig entfernt und/oder abgetragen. Insbesondere wird die Halteeinrichtung soweit entfernt und/oder abgetragen, dass das in den Freiraum eingebrachte andere Material auf der Gesamtfunktionsseite bevorzugt vollständig sichtbar ist.

Die Gesamtfunktionsseite umfasst den ersten und den zweiten Sinterabschnitt und einen Werkstoffabschnitt. Dieser ist aus dem anderen, insbesondere vom gesinterten Werkstoff unterschiedlichen, Material, das in den Freiraum eingebracht ist, gebildet. Der Werkstoffabschnitt ist, insbesondere auf der Gesamtfunktionsseite, zwischen dem ersten und dem zweiten Sinterabschnitt angeordnet.

Der Vorteil der Erfindung ist darin zu sehen, dass die Relativpositionierung des ersten und des zweiten Sinterabschnitts zunächst durch die Halteeinrichtung unterstützt oder gebildet ist. Die Form des Grundgerüsts kann im Rahmen der Fertigungstechnik für gesinterte Bauelemente frei gewählt werden. Mit dem Einbringen des anderen Werkstoffs sind der erste und der zweite Sinterabschnitt über den anderen Werkstoff verbunden, so dass die Halteeinrichtung nicht mehr benötigt ist und in dem weiteren Schritt entfernt werden kann. Somit bildet das Grundgerüst mit der Halteeinrichtung eine integrierte Positionierhilfe für die den ersten und den zweiten Sinterabschnitt aus.

In einer bevorzugten Ausführungsform der Erfindung ist die mindestens eine Halteeinrichtung als mindestens ein Steg ausgebildet. Vorzugsweise erstreckt sich der Steg vollständig über den Freiraum, wobei er vom ersten Sinterabschnitt zum zweiten reicht. Insbesondere ist der Steg mit einem Ende mit dem ersten und mit dem anderen Ende mit dem zweiten Sinterabschnitt verbunden. Im Speziellen liegt der Steg endseitig auf den Sinterabschnitten auf oder geht endseitig in die Sinterabschnitte über. Optional ist die Gesamtfunktionsseite durch den Steg nur teil- oder abschnittsweise bedeckt und aufgrund dessen teil- und/oder abschnittsweise sichtbar, bevor der Steg entfernt wird.

In einer bevorzugten Umsetzung der Erfindung beträgt die Dicke des Stegs mindestens 0,1 Millimeter, insbesondere mindestens 0,07 Millimeter und/oder maximal 1 Millimeter. In dieser Stärke ist der Steg besonders wirtschaftlich abtragbar und/oder entfernbar. In einer besonders bevorzugten Umsetzung beträgt die Dicke des Stegs 0,6 Millimeter. Eine größere Stärke des Stegs als 1 Millimeter ist zwar im Rahmen der Erfindung grundsätzlich möglich, würde jedoch wirtschaftliche Nachteile mit sich bringen.

Alternativ ist die mindestens eine Halteeinrichtung als mindestens eine Haut ausgebildet. Bevorzugt erstreckt sich die Haut über den Freiraum hinweg. Vorzugsweise bedeckt die Haut neben dem Freiraum auch den ersten und zweiten Sinterabschnitt zumindest größtenteils, bevorzugt jedoch vollständig. Insbesondere ist die Gesamtfunktionsseite zum Großteil, bevorzugt ganz von der Haut bedeckt, sodass die Gesamtfunktionsseite vor dem Entfernen der Haut nicht oder größtenteils nicht sichtbar ist.

Eine bevorzugte Ausgestaltung der Erfindung sieht vor, dass die Dicke der Haut mindestens 0,1 Millimeter, insbesondere mindestens 0,07 Millimeter und/oder maximal 1 Millimeter beträgt. In dieser Stärke ist die Haut besonders wirtschaftlich abtragbar und/oder entfernbar. In einer besonders bevorzugten Ausgestaltung beträgt die Dicke der Haut 0,6 Millimeter. Eine größere Stärke der Haut als 1 Millimeter ist zwar im Rahmen der Erfindung grundsätzlich möglich, würde jedoch wirtschaftliche Nachteile mit sich bringen.

In einer bevorzugten Ausführungsform der Erfindung wird die mindestens eine Halteeinrichtung durch einen Trennvorgang entfernt. Beispielsweise umfasst der Trennvorgang ein abtragendes Verfahren, z.B. ein Abschleifen der Halteeinrichtung, oder ein Entfernen der Halteeinrichtung durch Laserstrahlschneiden.

Es ist besonders bevorzugt, dass der erste und zweite Sinterabschnitt und der Werkstoffabschnitt gemeinsam formgebend auf der Gesamtfunktionsseite insbesondere flächig bearbeitet werden. Beispielsweise umfasst die gemeinsame formgebende Bearbeitung einen Schleif- und/oder Poliervorgang der Gesamtfunktionsseite. Insbesondere werden die beiden Sinterabschnitte und der Werkstoffabschnitt auf der Gesamtfunktionsseite gemeinsam geschliffen und/oder poliert. Möglich ist beispielsweise, dass die Gesamtfunktionsseite durch eine rotierenden Polierscheibe poliert wird oder dass das Sinter-Komposit-Bauteil in einer Poliertrommel poliert wird. Die formgebende Bearbeitung kann als ein separater Schritt nach dem Trennvorgang durchgeführt werden, den Trennvorgang bilden oder mitbilden.

Ein weiterer Gegenstand der Erfindung umfasst ein Sinter-Komposit-Bauteil mit einer Gesamtfunktionsseite. Die Gesamtfunktionsseite umfasst einen ersten und zweiten Sinterabschnitt und einen Werkstoffabschnitt, wobei der Werkstoffabschnitt zwischen dem ersten und zweiten Sinterabschnitt angeordnet ist. Der erste Sinterabschnitt ist durch den Werkstoffabschnitt, insbesondere in einer Draufsicht auf die Gesamtfunktionsseite und in einer Schnittansicht des Sinter-Komposit-Bauteils, isoliert zum zweiten Sinterabschnitt angeordnet. Besonders bevorzugt ist, dass der erste Sinterabschnitt in der Draufsicht auf die Gesamtfunktionsseite und in der Schnittansicht des Sinter-Komposit-Bauteils vollständig durch den Werkstoffabschnitt isoliert zum zweiten Sinterabschnitt angeordnet ist. Insbesondere besteht in der Draufsicht und in der

Schnittansicht insbesondere in jeder Ebene keine gesinterte Verbindung zwischen dem ersten und zweiten Sinterabschnitt.

In dieser Ausgestaltung des Sinter-Komposit-Bauteils ist der Werkstoffabschnitt in der Schnittansicht zwischen dem ersten und zweiten Sinterabschnitt angeordnet, sodass er diese vollständig voneinander trennt. Optional ergänzend ist der erste Sinterabschnitt in einer Draufsicht auf die Gesamtfunktionsseite vollständig vom Werkstoffabschnitt umgeben. Diese Ausgestaltung ist durch das erfindungsgemäße Verfahren besonders einfach möglich, da der erste Sinterabschnitt und/oder der zweite Sinterabschnitt durch die mindestens eine Halteeinrichtung zunächst sehr genau positioniert und die Halteeinrichtung als Positionierhilfe nachfolgend entfernt werden kann, so dass in dem Sinter-Komposit-Bauteil die zwei Sinterabschnitte unabhängig voneinander angeordnet und trotzdem sehr genau zueinander positioniert sind.

Insbesondere in dieser Ausgestaltung kann auf der Gesamtfunktionsseite beispielsweise mindestens ein grafischer Informationsträger oder Symbolträger, wie zum Beispiel ein Bild, ein Zeichen, ein Buchstabe, eine Zahl oder ein Symbol durch den Werkstoffabschnitt gebildet sein. Im Speziellen ist auf der Gesamtfunktionsseite ein verlorenes Symbol darstellbar.

In einer ersten bevorzugten Umsetzung der Erfindung ist das verlorene Symbol beispielsweise als oder innerhalb des oder der Buchstabe/n O, A, B, P, D, Q, R oder als die Zahl/en 0, 4, 6, 8 oder 9 oder als ein oder mehrere Rechtecks-, Dreiecks- oder Quadratsymbol/e etc. ausgebildet. Bei diesen und möglichen weiteren Buchstaben, Zahlen und Symbolen ist eine Füllung durch eine Kontur der Buchstaben und Zahlen von der Umgebung isoliert angeordnet. Die Kontur der Buchstaben und Zahlen wird bevorzugt durch den Werkstoffabschnitt gebildet, die Füllung, die dem verlorenen Symbol entspricht, durch den ersten Sinterabschnitt und die Umgebung durch den zweiten Sinterabschnitt. Die durch den ersten Werkstoffabschnitt gebildete Füllung, die dem verlorenen Symbol entspricht, ist vollständig isoliert zum zweiten Werkstoffabschnitt angeordnet. Insbesondere ist die Füllung in der Draufsicht auf die Gesamtfunktionsseite und in der Schnittansicht des Sinter-Komposit-Bauteils vollständig vom Werkstoffabschnitt umgeben.

In einer zweiten bevorzugten Umsetzung der Erfindung ist das verlorene Symbol dadurch gebildet, dass die Kontur eines oder mehrerer beliebiger Buchstaben, Zahlen, Bilder, Zeichen oder Symbole durch den ersten Werkstoffabschnitt gebildet ist. Dies kann z.B. bei einem Punkt, Komma, Ausrufezeichen, Fragezeichen, etc. als Zeichen oder Symbol oder z.B. bei den Buchstaben C, E, F, G, H, I, J, K, L, M, N, S, T, U, V, W, X, Y, Z oder den Zahlen 1, 2, 3, 5, 7 der Fall sein. Die durch den ersten Werkstoffabschnitt gebildete Kontur des oder der Buchstaben, Zahlen, Zeichen oder Symbole ist vorzugsweise in der Draufsicht auf die Gesamtfunktionsseite und in der Schnittansicht des Sinter-Komposit-Bauteils vollständig vom Werkstoffabschnitt umgeben, wodurch die Kontur umrandet und gegenüber der Umgebung erkennbar bzw. sichtbar wird. Bevorzugt ist der Werkstoffabschnitt vom zweiten Sinterabschnitt umgeben. Insbesondere ist die Umgebung des Werkstoffabschnitts durch den zweiten Sinterabschnitt gebildet. Im Speziellen ist der die Kontur des oder der beliebigen Buchstaben, Zahlen, Zeichen oder Symbole bildende erste Sinterabschnitt in der Draufsicht auf die Gesamtfunktionsseite und in der Schnittansicht des Sinter-Komposit-Bauteils vollständig isoliert zum zweiten Sinterabschnitt angeordnet. Somit bildet der erste Sinterabschnitt auch in der zweiten bevorzugten Umsetzung der Erfindung das verlorene Symbol.

Alternativ ist es auch möglich, dass der erste Sinterabschnitt nur teilweise durch den Werkstoffabschnitt isoliert zum zweiten Sinterabschnitt angeordnet ist. In diesem Fall kann der erste Sinterabschnitt in einer Schnittansicht und optional an einer von der Gesamtfunktionsseite abweichenden Seite durch eine gesinterte Brücke mit dem zweiten Sinterabschnitt verbunden sein.

In einer bevorzugten Ausgestaltung der Erfindung sind die beiden Sinterabschnitte stoffschlüssig mit dem Werkstoffabschnitt verbunden. Beispielsweise wird das gesinterte Grundgerüst mit dem anderen Werkstoff umspritzt oder der andere Werkstoff wird zwischen die beiden Sinterabschnitte eingegossen. Alternativ kann der Werkstoffabschnitt als Feststoff, insbesondere als Inlay, in den Freiraum eingeklebt werden.

Eine bevorzugte Umsetzung der Erfindung sieht vor, dass der andere Werkstoff lichtdurchlässig und/oder transluzent ausgebildet ist, sodass der Werkstoffabschnitt mit Licht be- oder hinterleuchtbar ist. Möglich ist, dass das Sinter-Komposit-Bauteil mindestens eine Lichtquelle, z.B. eine weiße oder farbige LED (RGB-LED), zur Erzeugung von Licht umfasst. Bevorzugt ist dem Sinter-Komposit-Bauteil die Lichtquelle zugeordnet. Somit kann in vorteilhafter Weise erreicht werden, dass das durch die Lichtquelle erzeugte Licht an einer Funktionsseite des Werkstoffabschnitts austreten kann.

Erfindungsgemäß ist der andere Werkstoff elektrisch leitfähig ausgebildet, sodass ein elektrischer Kontakt an einer oder an der Funktionsseite des Werkstoffabschnitts erzeugbar ist. Insbesondere ist der Werkstoffabschnitt an der Funktionsseite dazu ausgebildet, eine Annäherung oder Berührung durch einen Nutzer zu erfassen und an eine elektrische Schnittstelle zu übermitteln. Somit kann durch die Berührung oder Annäherung an die Funktionsseite des Werkstoffabschnitts vorzugsweise ein elektrischer Impuls erzeugt und über die elektrische Schnittstelle übertragen werden. Beispielsweise ist das Sinter-Komposit-Bauteil auf der Funktionsseite des Werkstoffabschnitts berührungsempfindlich ausgebildet. Insbesondere kann das Sinter-Komposit-Bauteil eine Touchpad-Funktion aufweisen.

Erfindungsgemäß ist der andere Werkstoff aus Metall, insbesondere einer Metalllegierung, gebildet. Insbesondere unterscheidet sich der andere Werkstoff vom gesinterten Werkstoff in Zusammensetzung und/oder Verarbeitung. Der andere Werkstoff wird vorzugsweise als Inlay in den Freiraum eingesetzt und mit den Sinterabschnitten verklebt.

In einer bevorzugten Umsetzung der Erfindung ist der gesinterte Werkstoff als ein keramisches Material, wie z.B. Silikatkeramik, insbesondere Steatit, Cordierit oder Porzellan, ausgebildet. Alternativ ist das keramische

Material als Oxidkeramik, insbesondere Al203, ZrO2 oder TiO2, ausgebildet. Möglich ist auch, dass das keramische Material als nicht Oxidkeramik, insbesondere Si3N4, TiC, SiC, TiN oder AlN ausgebildet ist.

Im Rahmen der Erfindung ist es bevorzugt, dass das keramische Material insbesondere vor dem Sintern gefärbt und/oder mit einem Färbemittel versetzt ist. Beispielsweise werden zum keramischen Material Metalloxide hinzugefügt, die beim Sintern eine Färbung des keramischen Materials bewirken.

Durch das Einfärben kann das keramische Material optional eine andere Farbe als weiß aufweisen. Beispielsweise kann das keramische Material die Farbe schwarz, rot, gelb, blau, grün, orange, braun oder violett aufweisen. Insbesondere kann das keramische Material in einer der zahlreichen Farben der RAL-Palette ausgebildet sein.

In einer möglichen alternativen Umsetzung der Erfindung ist der gesinterte Werkstoff als Metall ausgebildet. Insbesondere ist der gesinterte Werkstoff der Metallurgie zuordbar. Dazu zählen zum Beispiel sogenannte "Sintermetalle" und Metalle der Pulvermetallurgie. Als Beispiele für das Metall können Edelstahl, Hartmetall oder Titan genannt werden.

Vorzugsweise beträgt ein Anteil des keramischen Materials oder des Metalls am gesinterten Werkstoff mehr als 50 Prozent, insbesondere mehr als 60 Prozent, im Speziellen mehr als 70 Prozent.

In einer bevorzugten konstruktiven Umsetzung der Erfindung ist das Sinter-Komposit-Bauteil als ein Bedienknopf für mechanische und/oder elektrische Funktionselemente ausgebildet. Vorzugsweise kann der Nutzer die mechanischen und/oder elektrischen Funktionselemente durch Betätigung des Bedienknopfes ansteuern, einstellen und/oder bedienen. Zum Beispiel ist der Bedienknopf als eine Drucktaste oder Druckknopf ausgebildet. Alternativ ist es möglich, dass der Bedienknopf als ein Dreh- oder Schieberegler ausgebildet ist.

Beispielsweise ist der Bedienknopf in einem Mobil, insbesondere in einem PKW, LKW oder Flugzeug, anordbar und zur Bedienung eines Radios, eines CD-Players, einer Klimaanlage oder eines Navigationssystems, etc. als Funktionselemente ausgebildet. Alternativ ist der Bedienknopf an sogenannter "Weißer Ware", insbesondere an Haushaltsgeräten wie z.B. Waschmaschinen, Spülmaschinen oder Kaffeeautomaten, etc. als Funktionselemente anordbar.

Besonders bevorzugt ist, dass der erste und zweite Sinterabschnitt und der Werkstoffabschnitt zusammen die Gesamtsichtseite des Bedienknopfes bilden. Insbesondere ist die Gesamtfunktionsseite des Sinter-Komposit-Bauteils als die Gesamtsichtseite des Bedienknopfes ausgebildet.

Optional kann die mindestens eine Lichtquelle zur Hinter- oder Beleuchtung des Bedienknopfes am Funktionselement angeordnet und so dem Bedienknopf zugeordnet sein. Dadurch kann das durch die Lichtquelle erzeugte Licht auf der Sichtseite des Werkstoffabschnitts austreten, wenn dessen Werkstoff lichtdurchlässig und/oder transluzent ausgebildet ist.

Optional weist der Bedienknopf eine elektrisch leitfähige, insbesondere eine berührungsempfindliche oder eine Touchpad-Oberfläche auf. Diese ist bevorzugt auf der Sichtseite des Werkstoffabschnitts gebildet, wenn der andere Werkstoff, durch den der Werkstoffabschnitt gebildet ist, elektrisch leitfähige Eigenschaften aufweist. Insbesondere wird in diesem Fall ermöglicht, dass der Nutzer durch Annäherung an den Bedienknopf oder durch Berührung des Bedienknopfes einen elektrischen Impuls auslöst und dadurch die mechanischen und/oder elektrischen Funktionselemente ansteuert. Im Speziellen wird durch die berührungsempfindliche Sichtseite des Werkstoffabschnitts eine intuitive Bedienung und Ansteuerung der Funktionselemente ermöglicht.

Besonders bevorzugt ist, dass der Werkstoffabschnitt mindestens eine auf einer von der Gesamtsichtseite abweichenden Seite des Bedienknopfes mechanische Schnittstelle für die mechanischen oder elektrischen Funktionselemente umfasst oder diese bildet. Im Falle, dass der andere Werkstoff des Werkstoffabschnitts aus Kunststoff gebildet ist, kann z.B. mindestens ein Gewinde und/oder Verbindungsstück als Schnittstelle angespritzt werden. Optional ist die Schnittstelle z.B. zur Anbringung am Funktionselement und/oder zur Übertragung von Kräften auf das Funktionselement, insbesondere zur Betätigung des Funktionselements, ausgebildet.

In einer weiteren bevorzugten konstruktiven Umsetzung der Erfindung ist das Sinter-Komposit-Bauteil als ein Schmuckstück oder als Bestandteil eines Schmuckstücks zum Tragen am Körper einer Person ausgebildet. Zum Beispiel ist das Sinter-Komposit-Bauteils als ein Ring, als ein Anhänger, als eine Hals- oder Armkette, als eine Uhr, als ein Ohrring, als ein Piercing oder als Bestandteil des-/derselben ausgebildet.

Besonders bevorzugt ist, dass der erste und zweite Sinterabschnitt und der Werkstoffabschnitt zusammen die Gesamtsichtseite des Schmuckstücks oder des Bestandteils des Schmuckstücks bilden. Insbesondere ist die Gesamtfunktionsseite des Sinter-Komposit-Bauteils als die Gesamtsichtseite des Schmuckstücks oder des Bestandteils ausgebildet.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1a: eine Schnittdarstellung eines Grundgerüsts zur Herstellung eines Sinter-Komposit-Bauteils;
- Figur 1b: eine Schnittdarstellung eines alternativen Grundgerüsts zur Herstellung des Sinter-Komposit-Bauteils;
- Figur 2a: das Grundgerüst aus Fig. 1a, wobei in Freiräume des Grundgerüsts ein anderer Werkstoff eingebracht ist;
- Figur 2b: das Grundgerüst aus Fig. 1b, wobei in Freiräume des Grundgerüsts ein anderer Werkstoff eingebracht ist;
- Figur 3: das fertig gestellte Sinter-Komposit-Bauteil in einer Schnittansicht;
- Figur 4: eine perspektivische Draufsicht auf eine Gesamtsichtseite eines als Bedienknopf ausgebildeten Sinter-Komposit-Bauteils;
- Figur 5a: der Bedienknopf aus Fig. 4 in einer perspektivischen Sicht auf eine Unterseite;
- Figur 5b: eine Schnittansicht entlang der Schnittlinie AA-AA durch den Bedienknopf aus Fig. 5.

Einander entsprechende oder gleiche Teile sind in den Figuren jeweils mit den gleichen Bezugszeichen versehen.

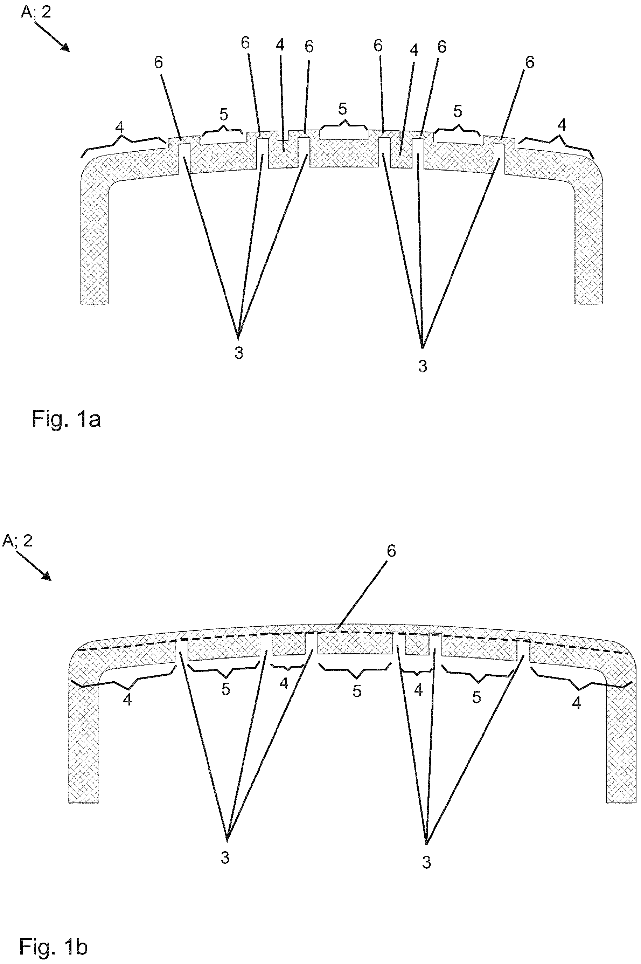

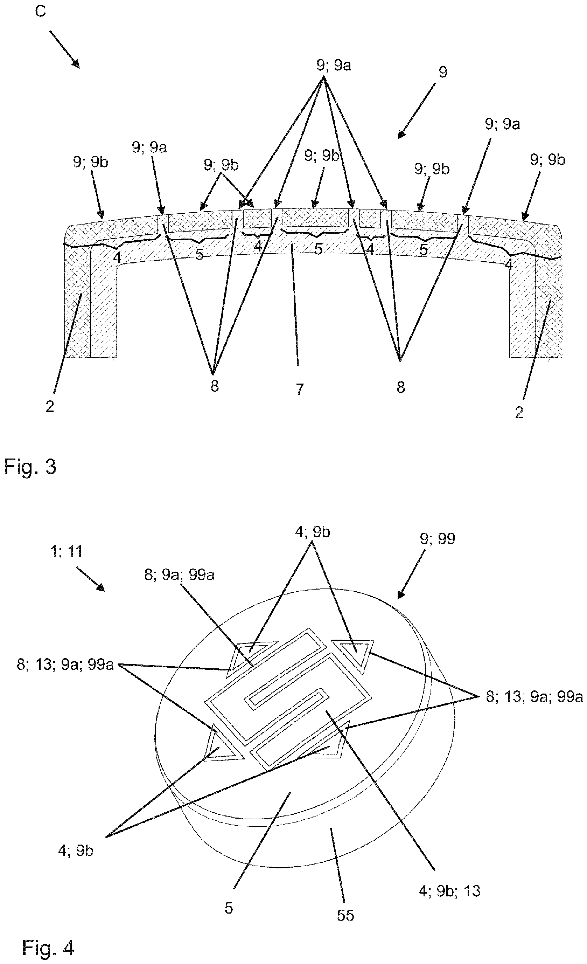

Figur 1a zeigt eine Schnittdarstellung eines Grundgerüsts 2, das in einem ersten Verfahrenschritt A zur Herstellung eines Sinter-Komposit-Bauteils 1 (Figur 4) angefertigt wird.

Das Grundgerüst 2 ist im Querschnitt C- oder U- förmig ausgebildet. Es ist aus einem gesinterten Werkstoff gebildet. Der gesinterte Werkstoff ist z.B. als ein keramischer Werkstoff, wie z.B. aus Silikatkeramik, Oxidkeramik oder Nichtoxidkeramik ausgebildet. Alternativ ist der gesinterte Werkstoff als Metall, insbesondere aus einem Sintermetall oder Pulvermetall, ausgebildet.

Das Grundgerüst 2 weist mindestens einen Freiraum 3, gemäß Fig. 1a mehrere, z.B. sechs Freiräume 3 auf. Zudem umfasst das Grundgerüst 2 Sinterabschnitte 4; 5 und Halteeinrichtungen 6. Die Halteeinrichtungen 6 sind aus dem gleichen gesinterten Werkstoff wie die Sinterabschnitte 4; 5, insbesondere im selben Fertigungsschritt, hergestellt. Insbesondere sind die Sinterabschnitte 4, 5 und die Halteeinrichtungen einstückig ausgebildet.

Jeder Freiraum 3 ist zwischen einem ersten und einem zweiten Sinterabschnitt 4; 5 angeordnet und wird von einer der Halteeinrichtungen 6 überbrückt. Jede Halteeinrichtung 6 ist als ein Steg ausgebildet. Der Steg erstreckt sich über den zwischen dem ersten und zweiten Sinterabschnitt angeordneten Freiraum 3 und liegt endseitig auf den Sinterabschnitten 4; 5 auf. Somit verbindet jede als Steg ausgebildete Halteeinrichtung 6 jeweils einen ersten und einen zweiten Sinterabschnitt 4; 5 miteinander.

Figur 1b zeigt einen Querschnitt durch das Grundgerüst 2 mit einer alternativen Halteeinrichtung 6. Die Halteeinrichtung 6 ist als eine Haut ausgebildet, die sich durchgängig über mehrere, insbesondere über alle Freiräume 3 und über mehrere, insbesondere alle, Sinterabschnitte 4; 5 erstreckt und diese miteinander verbindet.

Bei anderen Ausführungsbeispielen ist auch eine Mischung zwischen den Halteeinrichtungen 6 der Figuren 1 a und 1b möglich.

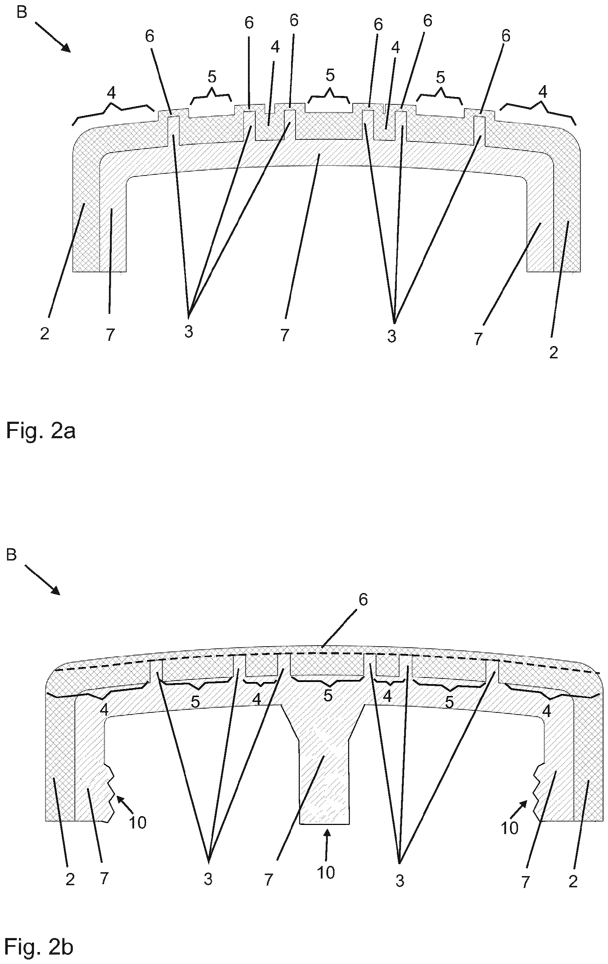

In Figur 2a ist das Grundgerüst aus Fig. 1a gezeigt, wobei in einem zweiten Verfahrensschritt B in die Zwischenräume 3 ein anderes Material 7 eingebracht wurde.

Das andere Material 7 ist aus einer Metalllegierung gebildet. Der andere Werkstoff 7 ist elektrisch leitfähig ausgebildet.
Im zweiten Verfahrensschritt B kann die Metalllegierung als das andere Material 7 als Festkörper in die Freiräume eingesetzt und darin verklebt werden.

Beim Einsetzen des anderen Materials, in die Freiräume 3 bilden die Halteeinrichtungen 6 hierfür einen Einfüllboden. Der Einfüllboden verhindert das Herausfallen des anderen Materials aus den Freiräumen 3.

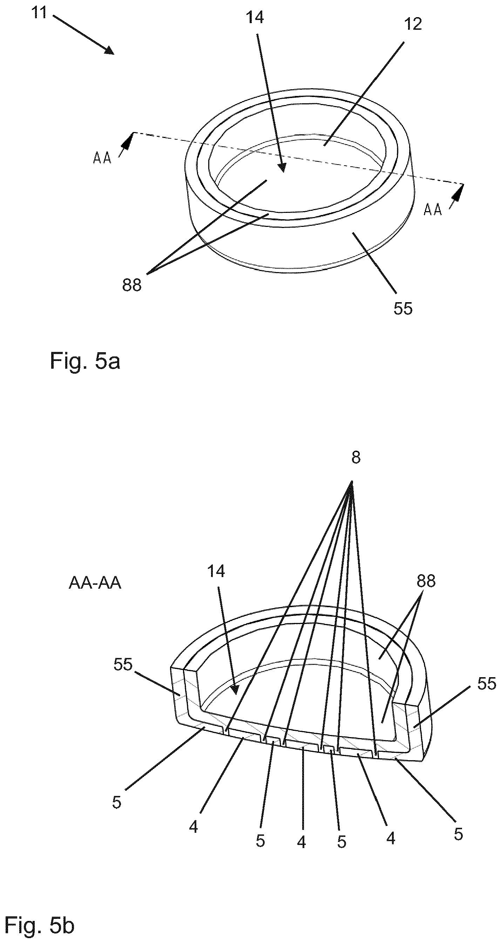

Figur 2b zeigt das Grundgerüst 2 aus Fig. 1b nach dem zweiten Verfahrensschritt B zur Herstellung des Sinter-Komposit-Bauteils 1. Durch das andere Material 7 sind Schnittstellen 10, z.B. für mechanische oder elektrische Funktionselemente gebildet, mit denen das Sinter-Komposit-Bauteil 1 in einer späteren Anwendung z.B. als Bedienknopf 11 (Fig. 4; 5a; 5b) zusammenwirken kann.

In Figur 3 ist das fertige Sinter-Komposit-Bauteil 1 im Querschnitt gezeigt, wobei dieses in einem dritten Verfahrensschritt C fertig gestellt wurde. Im dritten Verfahrensschritt C werden die Halteeinrichtungen 6 durch ein trennendes, spanendes oder abtragendes Verfahren entfernt. Beispielsweise werden die Halteeinrichtungen 6 dabei abgeschliffen oder durch Lasern abgetragen. Durch die Entfernung der Halteeinrichtungen 6 wird eine Gesamtfunktionsseite 9 des Sinter-Komposit-Bauteils 1 gebildet.

Die Gesamtfunktionsseite 9 umfasst die einzelnen Sinterabschnitte 4; 5 und mehrere Werkstoffabschnitte 8. Die Werkstoffabschnitte 8 sind durch den in die ursprünglichen Freiräume 3 (Fig. 1a; 1b; 2a; 2b) eingebrachten anderen Werkstoff 7 gebildet und jeweils zwischen zwei der Sinterabschnitte 4; 5 angeordnet. Insbesondere setzt sich die Gesamtfunktionsfläche 9 des Sinter-Komposit-Bauteils 1 aus den Funktionsflächen 9a der Werkstoffabschnitte 8 und aus den Funktionsflächen 9b der Sinterabschnitte 4; 5 zusammen.

Figur 4 zeigt das oder ein weiteres Sinter-Komposit-Bauteil 1 in einer perspektivischen Draufsicht auf die Gesamtfunktionsseite 9. Das Sinter-Komposit-Bauteil 1 ist als ein Bedienknopf 11 für elektrische oder mechanische Funktionsbauteile, zum Beispiel für Mobile, Fahrzeuge oder Haushaltsgeräte ausgebildet.

Der Bedienknopf 11 ist als Drehknopf zur Regelung, Ansteuerung und/oder Bedienung der Funktionsbauteile ausgebildet. In der Ausbildung als Bedienknopf 11 bildet die Gesamtfunktionsseite 9 eine Gesamtsichtseite 99 des Bedienknopfes 11, wenn der Bedienknopf 11 auf dem Funktionsbauteil montiert ist.

Die Gesamtsichtseite 99 ist durch den ersten und den zweiten Sinterabschnitt 4; 5 und durch den Werkstoffabschnitt 8 gebildet. Auf der Gesamtsichtseite 99 sind zwei unterschiedliche Realisierungsmöglichkeiten für verlorene Symbole umgesetzt.

In einer ersten Umsetzung bildet der Werkstoffabschnitt 8 auf der Gesamtsichtseite 99 einen als Zeichen oder Symbol ausgebildeten grafischen Informationsträger 13, in Fig. 4 insbesondere vier Dreieckskonturen. Eine Füllung der Dreieckskonturen ist durch den ersten Sinterabschnitt 4 gebildet. Die die Dreieckskonturen bildenden Werkstoffabschnitte 8 sind vom zweiten Werkstoffabschnitt 5 umgeben. Dieser bildet auch eine kreisrunde gesinterte Außenwand 55 des Bedienknopfes 11.

Die durch den ersten Sinterabschnitt 4 gebildeten Füllungen der Dreieckskonturen sind, insbesondere auch in einer Schnittansicht gemäß Fig. 5b, von den jeweiligen Werkstoffabschnitten 8, vollständig umgeben. Dadurch sind die ersten Sinterabschnitte 4 vollständig isoliert zur durch den zweiten Sinterabschnitt 5 gebildeten Umgebung angeordnet. Die ersten Sinterabschnitte 4 bilden somit verlorene Symbole des Bedienknopfes 11. Diese sind in der Draufsicht der Fig. 4 und in der Schnittansicht der Fig. 5b ausschließlich über die jeweiligen Werkstoffabschnitte 8 an den zweiten Sinterabschnitt 5 angebunden.

In einer zweiten Umsetzung bildet der erste Sinterabschnitt 4 den grafischen Informationsträger 13, in Fig. 4 insbesondere die Kontur des Buchstabens S (S-Kontur). Die S-Kontur ist, insbesondere auch in der Schnittansicht gemäß Fig. 5b, vollständig vom Werkstoffabschnitt 8 umgeben. Der Werkstoffabschnitt 8 bildet eine Umrandung für den die S-Kontur bildenden ersten Sinterabschnitt 4 und macht diesen dadurch auf der Gesamtsichtseite 99 erkennbar bzw. sichtbar. Der Werkstoffabschnitt 8 grenzt den ersten Sinterabschnitt 4 vom zweiten Sinterabschnitt 5 ab, welcher die Umgebung des Werkstoffabschnitts 8 bildet. Somit ist der erste Sinterabschnitt 4, der die S-Kontur bildet, insbesondere auch gemäß der Schnittansicht der Fig. 5b, vollständig isoliert zum zweiten Sinterabschnitt 5 angeordnet. Der erste Sinterabschnitt 4 bildet das verlorene Symbol des Bedienknopfes 11. Dieses ist in der Draufsicht der Fig. 4 und in der Schnittansicht der Fig. 5b ausschließlich über den Werkstoffabschnitt 8 an den zweiten Sinterabschnitt 5 angebunden.

Figur 5a zeigt den Bedienknopf 11 in einer perspektivischen Sicht von unten. In Figur 5b ist der Bedienknopf 11 im Querschnitt entlang der Schnittlinie AA-AA gezeigt.

Die äußeren zweiten Sinterabschnitte 5 sind im Querschnitt zu einer Auflageebene des Bedienknopfes 11 winklig, insbesondere rechtwinklig, ausgebildet. Dadurch sind sie Bestandteil der Gesamtsichtseite 99 und bilden zugleich die kreisförmige gesinterte Außenwand 55.

Die Werkstoffabschnitte 8 sind in den Freiräumen 3 angeordnet und erstrecken sich von dort aus weiter über eine der Gesamtsichtseite 99 gegenüberliegende Unterseite 14. Durch die Werkstoffabschnitte 8 ist eine Werkstoffschicht 88 gebildet, die die Unterseite 14 bedeckt. Die Werkstoffschicht 88 ist im Querschnitt winklig, vorzugsweise rechtwinklig ausgebildet und erstreckt sich ebenfalls entlang der kreisförmigen gesinterten Außenwand 55 als eine innenliegende Wand.

Zusammen mit der gesinterten Außenwand 55 schließt die innenliegende Werkstoffschicht 88 einen Hohlraum 12 ein. Durch den Hohlraum 12 kann der Bedienknopf 11 auf eine entsprechende Aufnahme des Funktionselements aufgesetzt werden. Optional ergänzend ist durch die Werkstoffschicht 88 die mindestens eine Schnittstelle 10 (gemäß Fig. 2b) zur Befestigung an den Funktionselementen und/oder zur Kraft- und/oder Signalübertragung auf die Funktionselemente gebildet.

Wenn dem Bedienknopf 11 eine Lichtquelle zur Erzeugung von Licht zugeordnet ist, kann dieser beleuchtet oder hinterleuchtet werden. Beispielsweise umfasst das Funktionselement, auf das der Bedienknopf 11 aufgesetzt ist, die Lichtquelle oder der Bedienknopf 11 selbst weist die Lichtquelle auf.

Wenn der andere Werkstoff 7 (Fig. 1a, 1b, 2a, 2b, 3), der den Werkstoffabschnitt 8 und die Werkstoffschicht 88 bildet, elektrisch leitfähig ausgebildet ist, kann ein elektrischer Impuls, z.B. über die Schnittstelle/n 10 (Fig. 2b) an das Funktionselement übermittelt werden, auf dem der Bedienknopf 11 aufgesetzt ist.

Der elektrische Impuls ist z.B. durch eine Annäherung und/oder Berührung der Gesamtsichtseite 99 auslösbar. Insbesondere wird durch die elektrische Leitfähigkeit des anderen Werkstoffs 7 auf der Sichtseite 99a des Werkstoffabschnitts 8 eine Touchpad-Funktion umgesetzt, da die Sichtseite 99a berührungsempfindlich ausgebildet ist. Somit kann ein Nutzer das Funktionselement über den Bedienknopf intuitiv ansteuern und/oder bedienen.

Während vorstehend mindestens ein Ausführungsbeispiel detailliert offenbart wurde, ist es anzuerkennen, dass eine Vielzahl von erfindungsgemäßen Variationen existieren. Es ist ebenfalls anzuerkennen, dass das mindestens eine Ausführungsbeispiel nur beispielhaften Charakter hat und keine Begrenzung des Schutzumfangs, der Anwendungsgebiete oder der Konfiguration darstellt. Vielmehr soll die vorliegende Offenbarung einen angenehmen Fahrplan zur Umsetzung mindestens eines Ausführungsbeispiels geben. Somit sollte es anzuerkennen sein, dass verschiedene Variationen der Funktion oder der Anordnung der Elemente des mindestens einen Ausführungsbeispiels umgesetzt werden können, ohne den Umfang zu verlassen, der durch die Ansprüche und deren rechtmäßigen Äquivalente vorgegeben ist.

### Bezugszeichenliste:

- 1: Sinter-Komposit-Bauteil
- 2: Grundgerüst
- 3: Freiraum
- 4: erster Sinterabschnitt
- 5: zweiter Sinterabschnitt
- 6: Halteeinrichtung
- 7: anderer Werkstoff
- 8: Werkstoffabschnitt
- 9: Gesamtfunktionsseite
- 9a: Funktionsseite des Werkstoffabschnitts
- 9b: Funktionsseite der beiden Sinterabschnitte
- 10: Schnittstelle
- 11: Bedienknopf
- 12: Hohlraum
- 13: grafischer Informationsträger
- 14: Unterseite
- 55: gesinterte Außenwand, gebildet durch zweiten Sinterabschnitt
- 88: Werkstoffschicht, Innenwand
- 99: Gesamtsichtseite des Bedienknopfes
- 99a: Sichtseite des Werkstoffabschnitts

## Patentansprüche

1. Verfahren zur Herstellung eines Sinter-Komposit-Bauteils (1), **gekennzeichnet durch** folgende Schritte:
Fertigung eines Grundgerüsts (2), wobei das Grundgerüst (2) aus einem gesinterten Werkstoff besteht, wobei das Grundgerüst (2) einen ersten und einen zweiten Sinterabschnitt (4; 5) und mindestens eine gesinterte Halteeinrichtung (6) umfasst, wobei zwischen dem ersten und zweiten Sinterabschnitt (4; 5) ein Freiraum (3) angeordnet ist, der durch die Halteeinrichtung (6) überbrückt ist, sodass der erste und zweite Sinterabschnitt (4; 5) durch die Halteeinrichtung (6) miteinander verbunden sind;
Einbringen eines anderen Werkstoffs (7) in den Freiraum (3) ;
Entfernen der Halteeinrichtung (6), sodass das Sinter-Komposit-Bauteil (1) gebildet ist, wobei das Sinter-Komposit-Bauteil (1) eine Gesamtfunktionsseite (9) aufweist, die einen Werkstoffabschnitt (8) aus dem anderen Werkstoff (7) und den ersten und zweiten Sinterabschnitt (4; 5) umfasst, wobei der Werkstoffabschnitt (8) zwischen dem ersten und dem zweiten Sinterabschnitt (4; 5) angeordnet ist, wobei der andere Werkstoff aus Metall gebildet ist, wobei der andere Werkstoff (7) elektrisch leitfähig ist, sodass ein elektrischer Kontakt an einer Funktionsseite (9a) des Werkstoffabschnitts (8) erzeugbar ist.

2. Verfahren nach Anspruch 1, **dadurch gekennzeichnet dass** die mindestens eine Halteeinrichtung (6) als mindestens ein Steg oder als mindestens eine Haut ausgebildet ist, die sich über den Freiraum (3) hinweg erstreckt.

3. Verfahren nach Anspruch 1 oder 2, **dadurch gekennzeichnet, dass** die mindestens eine Halteeinrichtung (6) durch einen Trennvorgang entfernt wird.

4. Verfahren nach einem der vorhergehenden Ansprüche, **dadurch gekennzeichnet, dass** der erste und zweite Sinterabschnitt (4; 5) und der Werkstoffabschnitt (8) gemeinsam formgebend auf der Gesamtfunktionsseite (9) bearbeitet werden.

5. Verfahren nach Anspruch 4, **dadurch gekennzeichnet, dass** die gemeinsame formgebende Bearbeitung des ersten und zweiten Sinterabschnitts (4; 5) und des Werkstoffabschnitts (8) einen Schleif- und/oder Poliervorgang umfasst.

6. Sinter-Komposit-Bauteil (1), wobei das Sinter-Komposit-Bauteil (1) eine Gesamtfunktionsseite (9) aufweist, die einen ersten und zweiten Sinterabschnitt (4; 5) und einen Werkstoffabschnitt (8) umfasst, wobei der Werkstoffabschnitt (8) zwischen dem ersten und zweiten Sinterabschnitt (4; 5) angeordnet ist, wobei der erste Sinterabschnitt (4) durch den Werkstoffabschnitt (8) isoliert zum zweiten Sinterabschnitt (5) angeordnet ist, wobei der Werkstoffabschnitt (4; 5) aus einem anderem Werkstoff (7) gebildet ist, **dadurch gekennzeichnet, dass** der andere Werkstoff aus Metall gebildet ist, wobei der andere Werkstoff (7) elektrisch leitfähig ist, sodass ein elektrischer Kontakt an einer Funktionsseite (9a) des Werkstoffabschnitts (8) erzeugbar ist.

7. Sinter-Komposit-Bauteil (1) nach Anspruch 6, **dadurch gekennzeichnet, dass** der erste Sinterabschnitt (4) durch den Werkstoffabschnitt (8) vollständig isoliert zum zweiten Sinterabschnitt (5) angeordnet ist.

8. Sinter-Komposit-Bauteil (1) nach Anspruch 6 oder 7, **dadurch gekennzeichnet, dass** der Werkstoffabschnitt (8) auf der Gesamtfunktionsseite (9) einen grafischen Informationsträger (13) bildet.

9. Sinter-Komposit-Bauteil (1) nach einem der Ansprüche 6 bis 8, **dadurch gekennzeichnet, dass** die beiden Sinterabschnitte (4; 5) stoffschlüssig mit dem Werkstoffabschnitt (8) verbunden sind.

10. Sinter-Komposit-Bauteil (1) nach einem der Ansprüche 6 bis 10, **dadurch gekennzeichnet, dass** der gesinterte Werkstoff als ein keramisches Material, insbesondere Silikatkeramik, Oxidkeramik oder Nichtoxidkeramik, oder als Metall, insbesondere aus der Pulvermetallurgie und/oder Sintermetall, ausgebildet ist.

11. Sinter-Komposit-Bauteil (1) nach einem der Ansprüche 6 bis 11, **dadurch gekennzeichnet, dass** das Sinter-Komposit-Bauteil (1) als ein Bedienknopf (11) für mechanische und/oder elektrische Funktionselemente ausgebildet ist.

12. Sinter-Komposit-Bauteil (1) nach Anspruch 12, **dadurch gekennzeichnet, dass** der erste und zweite Sinterabschnitt (4; 5) und der Werkstoffabschnitt (8) zusammen die Gesamtsichtseite (9) des Bedienknopfes (11) bilden.

13. Sinter-Komposit-Bauteil (1) nach Anspruch 13, **dadurch gekennzeichnet, dass** der Werkstoffabschnitt (8) auf einer von der Gesamtsichtseite (9) abweichenden Seite des Bedienknopfes (11) als mindestens eine mechanische oder elektrische Schnittstelle (10) für die mechanischen oder elektrischen Funktionselemente ausgebildet ist.

## Claims

1. A method for producing a sinter composite component (1), **characterized by** the following steps:
Manufacturing a basic structure (2), wherein the basic structure (2) consists of a sintered material, wherein the basic structure (2) comprises one first and one second sintered portion (4; 5) and at least one sintered holding device (6), wherein a free space (3) is arranged between the first and second sintered portion (4; 5) which is bridged by means of the holding device (6), so that the first and second sintered portions (4; 5) are connected to each other by means of the holding device (6);
Introducing a different material (7) into the free space (3) ;
Removing the holding device (6), so that the sinter composite component (1) is formed, wherein the sinter composite component (1) has a total functioning side (9) which comprises a material portion (8) made of the different material (7) and the first and second sintered portions (4; 5), wherein the material portion (8) is arranged between the first and the second sintered portions (4; 5), wherein the different material is formed from metal, wherein the different material (7) is electrically conductive, so that an electrical contact can be produced on a functioning side (9a) of the material portion (8).

2. The method according to Claim 1, **characterized in that**
the at least one holding device (6) is configured as at least one crosspiece or as at least one skin which extends across the free space (3).

3. The method according to Claim 1 or 2, **characterized in that** the at least one holding device (6) is removed by means of a separation process.

4. The method according to any one of the preceding claims, **characterized in that** the first and second sintered portions (4; 5) and the material portion (8) are jointly shaped on the total functioning side (9).

5. The method according to Claim 4, **characterized in that** the joint shaping of the first and second sintered portions (4; 5) and of the material portion (8) comprises a grinding and/or polishing process.

6. The sinter composite component (1), wherein the sinter composite component (1) has a total functioning side (9), which comprises one first and one second sintered portion (4; 5) and a material portion (8), wherein the material portion (8) is arranged between the first and second sintered portion (4; 5), wherein the first sintered portion (4) is arranged so that it is insulated by the material portion (8) from the second sintered portion (5), wherein the material portion (4; 5) is formed from a different material (7), **characterized in that** the different material is formed from metal, wherein the different material (7) is electrically conductive, so that an electrical contact can be produced on a functioning side (9a) of the material portion (8).

7. The sinter composite component (1) according to Claim 6, **characterized in that** the first sintered portion (4) is arranged so that it is completely insulated by the material portion (8) from the second sintered portion (5).

8. The sinter composite component (1) according to Claim 6 or 7, **characterized in that** the material portion (8) on the total functioning side (9) forms a graphical information carrier (13).

9. The sinter composite component (1) according to any one of Claims 6 to 8, **characterized in that** the two sintered portions (4; 5) are connected in a firmly bonded manner with the material portion (8).

10. The sinter composite component (1) according to any one of Claims 6 to 10, **characterized in that** the sintered material is configured as a ceramic material, in particular silicate ceramic, oxide ceramic or non-oxide ceramic, or as a metal, in particular from powder metallurgy and/or sintered metal.

11. The sinter composite component (1) according to any one of Claims 6 to 11, **characterized in that** the sinter composite component (1) is configured as a control knob (11) for mechanical and/or electrical functional elements.

12. The sinter composite component (1) according to Claim 12, **characterized in that** the first and second sintered portions (4; 5) and the material portion (8) together form the overall view side (9) of the control knob (11).

13. The sinter composite component (1) according to Claim 13, **characterized in that** the material portion (8) is configured on a side of the control knob (11) differing from the overall view side (9) as at least one mechanical or electrical interface (10) for the mechanical or electrical functional elements.

## Revendications

1. Procédé de fabrication d'un composant composite fritté (1), **caractérisé par** les étapes suivantes ;
production d'une structure de base (2), la structure de base (2) se composant d'un matériau fritté, la structure de base (2) comprenant un premier et un deuxième tronçon fritté (4 ; 5) et au moins un dispositif de retenue (6) fritté, un espace libre (3) étant disposé entre le premier et le deuxième tronçon fritté (4 ; 5) et étant enjambé par le dispositif de retenue (6) de telle sorte que le premier et le deuxième tronçon fritté (4 ; 5) sont raccordés l'un à l'autre par le dispositif de retenue (6) ;
mise en place d'un autre matériau (7) dans l'espace libre (3) ;
enlèvement du dispositif de retenue (6) de telle sorte que le composant composite fritté (1) est formé, le composant composite fritté (1) présentant un côté fonctionnel global (9) qui comprend un tronçon de matériau (8) réalisé dans l'autre matériau (7) et le premier et le deuxième tronçon fritté (4 ; 5), le tronçon de matériau (8) étant disposé entre le premier et le deuxième tronçon fritté (4 ; 5), l'autre matériau étant formé de métal, l'autre matériau (7) étant électriquement conducteur de telle sorte qu'un contact électrique peut être produit sur un côté fonctionnel (9a) du tronçon de matériau (8).

2. Procédé selon la revendication 1, **caractérisé en ce que** le dispositif de retenue (6) au moins au nombre de un est constitué en tant qu'au moins un nervure ou en tant qu'au moins une peau qui s'étend par-dessus l'espace libre (3).

3. Procédé selon la revendication 1 ou 2, **caractérisé en ce que** le dispositif de retenue (6) au moins au nombre de un est enlevé par un processus de séparation.

4. Procédé selon l'une des revendications précédentes, **caractérisé en ce que** le premier et le deuxième tronçon fritté (4 ; 5) et le tronçon de matériau (8) sont usinés conjointement de façon façonnante sur le côté fonctionnel global (9).

5. Procédé selon la revendication 4, **caractérisé en ce que** l'usinage façonnant conjoint du premier et du deuxième tronçon fritté (4 ; 5) et du tronçon de matériau (8) comprend un processus de meulage et/ou de polissage.

6. Composant composite fritté (1), le composant composite fritté (1) présentant un côté fonctionnel global (9) qui comprend un premier et un deuxième tronçon fritté (4 ; 5) et un tronçon de matériau (8), le tronçon de matériau (8) étant disposé entre le premier et le deuxième tronçon fritté (4 ; 5), le premier tronçon fritté (4) étant formé par le tronçon de matériau (8) en étant isolé par rapport au deuxième tronçon fritté (5), le tronçon de matériau (4 ; 5) étant formé d'un autre matériau (7), **caractérisé en ce que** l'autre matériau est formé de métal, l'autre matériau (7) étant électriquement conducteur de telle sorte qu'un contact électrique peut être produit sur un côté fonctionnel (9a) du tronçon de matériau (8).

7. Composant composite fritté (1) selon la revendication 6, **caractérisé en ce que** le premier tronçon fritté (4) est complètement isolé par rapport au deuxième tronçon fritté (5) par le tronçon de matériau (8).

8. Composant composite fritté (1) selon la revendication 6 ou 7, **caractérisé en ce que** le tronçon de matériau (8) forme sur le côté fonctionnel global (9) un support d'information (13) graphique.

9. Composant composite fritté (1) selon l'une des revendications 6 à 8, **caractérisé en ce que** les deux tronçons frittés (4 ; 5) sont raccordés au tronçon de matériau (8) par liaison de matière.

10. Composant composite fritté (1) selon l'une des revendications 6 à 10, **caractérisé en ce que** le matériau fritté est constitué en tant que matériau céramique, en particulier céramique silicatée, céramique oxydée ou céramique non oxydée, ou en tant que métal, en particulier à partir de la métallurgie des poudres et/ou de métal fritté.

11. Composant composite fritté (1) selon l'une des revendications 6 à 11, **caractérisé en ce que** le composant composite fritté (1) est constitué en tant que bouton de commande (11) pour des éléments fonctionnels mécaniques et/ou électriques.

12. Composant composite fritté (1) selon la revendication 12, **caractérisé en ce que** le premier et le deuxième tronçon fritté (4 ; 5) et le tronçon de matériau (8) forment conjointement le côté visible global (9) du bouton de commande (11).

13. Composant composite fritté (1) selon la revendication 13, **caractérisé en ce que**, sur un côté du bouton de commande (11) qui s'éloigne du côté fonctionnel global (9), le tronçon de matériau (8) est constitué en tant qu'au moins une interface (10) mécanique ou électrique pour les éléments fonctionnels mécaniques ou électriques.
